# EUROPEAN PATENT SPECIFICATION

(11) **EP 4 373 255 B1**
(45) Date of publication and mention of the grant of the patent: **14.01.2026**
(21) Application number: 22744330.6
(22) Date of filing: 19.07.2022
(51) Int. Cl.: A01D 46/30, B25J 15/02, A01G 3/037, B25J 19/02

(54) **AGRICULTURAL MANIPULATOR; ASSEMBLY THEREOF WITH A ROBOT ARM**
LANDWIRTSCHAFTLICHER MANIPULATOR; ANORDNUNG DAVON MIT EINEM ROBOTERARM
MANIPULATEUR AGRICOLE; ASSEMBLAGE DE CELUI-CI AVEC UN BRAS ROBOTISÉ

(30) Priority: 19.07.2021 NL 2028781
(43) Date of publication of application: 29.05.2024
(73) Proprietor: Viscon Group Holding B.V., 3295 KH 's-Gravendeel (NL)
(72) Inventor: JOHN, Renji Kuncheria, 2629 JD Delft (NL); VAN DUIJN, Bart, 2629 JD Delft (NL); TOPLE, Pranshu, 2629 JD Delft (NL)
(74) Representative: Arnold & Siedsma
(86) International application number: PCT/NL2022/050421
(87) International publication number: WO 2023/003460

(56) References cited:
- EP-A1- 3 539 735
- CN-A- 106 363 618
- CN-A- 108 481 353
- CN-A- 108 582 127

## Description

The present disclosure relates to an agricultural manipulator. The manipulator is configured for harvesting, pruning and any other agricultural processing.

In agriculture there's a movement in the direction of the use of machines instead of labour. Existing machines are most often dedicated configurations, designed from the ground up, which is accompanied by high investments and long development times, while initially marketed machines have often proven too slow and/or inaccurate to replace labour. Such agricultural manipulator is for example known from CN 108 582 127 A, which discloses a manipulator with a pair of movable grippers for selectively grasping or releasing a fruit or crop to be harvested. Additionally, the manipulator comprises a scissor-like cutter being arranged above the movable grippers. Another agricultural gripper is known from EP 3 539 735 A1, which discloses a harvesting robot for picking strawberries. The manipulator comprises a pair of movable gripping jaws, each including a cutting unit. CN 108 481 353 A discloses an agricultural manipulator in accordance with the preamble of claim 1. The manipulator comprises a cutter with a cutter drive, wherein both are pivotable about a swinging axis for performing the cutting operation.

The drawbacks of the prior art are overcome by an agricultural manipulator in accordance with claim 1. Preferred embodiments are defined by the dependent claims.

Readily available robot arms have surprisingly proven to be able to provide a reliable and versatile platform, in particular industrial robot arms, for an agricultural manipulator according to the present disclosure, in that desired degrees of freedom can be achieved thereby, for orienting / directing manipulating devices of the agricultural manipulator according to the present disclosure. Thus approach to, retraction from and processing steps on stems, branches, leaves, prunes, produce for harvesting and the like are readily achievable with the manipulator when provided with a platform of a robot arm.

In accordance with the invention, gripper comprises gripper elements of which at least one is moveable relative to the carrier and relative to the other of the gripper elements, to selectively grip, when in a closed position, or release, when in an open position, a portion of a plant between gripping portions of the gripper elements.

The carrier may comprise a gripper drive connected to the at least one gripper element, that is moveable relative to the other of the clamp elements.

More than one of the gripper elements may be moveable relative to the carrier.

An agricultural manipulator with a gripper drive and more than one of the gripper elements being moveable relative to the carrier, the drive may be connected to one of the gripper elements that is movable relative to the carrier, wherein a transmission is arranged between the gripper element that is connected to the drive and at least one other gripper element that is also movable relative to the carrier.

The at least one gripper element, that is moveable relative to the carrier, may be connected to the carrier in a connection from a group, at least comprising: a rotation shaft, pivot, and a slide mechanism.

The gripper elements may be curved to define a space there between, when in the closed position.

The carrier, in accordance with the invention, comprises a cutter drive connected to the cutter.

In an embodiment with curved gripper elements and a cutter drive for the cutter, the cutter drive may be connected with the cutter through the space between the curved gripper elements.

The cutter, in accordance with the invention, is mounted on the carrier through a translation mechanism, configured to selectively advance the cutter towards or withdraw the cutter from the gripping portions of the gripper elements.

The translation mechanism is configured to advance the cutter towards or withdraw the cutter from the gripping portions of the gripper elements over sides of the gripper elements.

The cutter may comprise a rotary cutter blade.

The agricultural manipulator may further comprise an image capturing device and a processor, connected with at least one of the gripper and the cutter, and configured to control operation of the at least one of the gripper and the cutter based on captured images acquired through the image capturing device. Herein, an image capturing device may capture any type or kind of image, on the basis of which the manipulator or a processor may detect a position of a portion of a plant for processing, which is to say that depth images and/or any other kind or type data are encompassed within the expression of "an image", that enables the processing functions to be executed on selected portions of plants.

The present disclosure also relates to an assembly of an agricultural manipulator in accordance with claim 1 and a robot arm comprising a robot arm controller, wherein the manipulator is mounted on the robot arm via the connector arranged on the carrier.

The assembly may exhibit the features that the robot arm may be an industrial robot arm.

The assembly may exhibit the features that the image capturing device may be mounted on the robot arm.

The assembly may exhibit the features that the processor may be incorporated in the robot arm controller.

The assembly may exhibit the features that the robot arm controller may be positioned remote from the assembly.

Based on the above indications of features of embodiments of the present disclosure in terms of the appended claims, below an embodiment description is provided with reference to the appended drawing, where the scope of protection of the present disclosure according to the appended claims is by no means limited to any specific aspect or feature of the below discussed and in the drawing shown embodiments. Such exemplary embodiments are shown in the accompanying drawing, which shows distinct embodiments wherein the same or similar elements, components and/or aspects can be designated with the same or a similar reference numeral, and in which:
Figure 1 shows a schematic and perspective view of an agricultural manipulator and assembly thereof with a robot arm, according to the present disclosure;
Figure 2 shows a schematic and perspective view of the agricultural manipulator of figure 1 from behind (arrow II in figure 1); and
Figure 3 shows several perspective views to augment the views of figures 1 and 2.

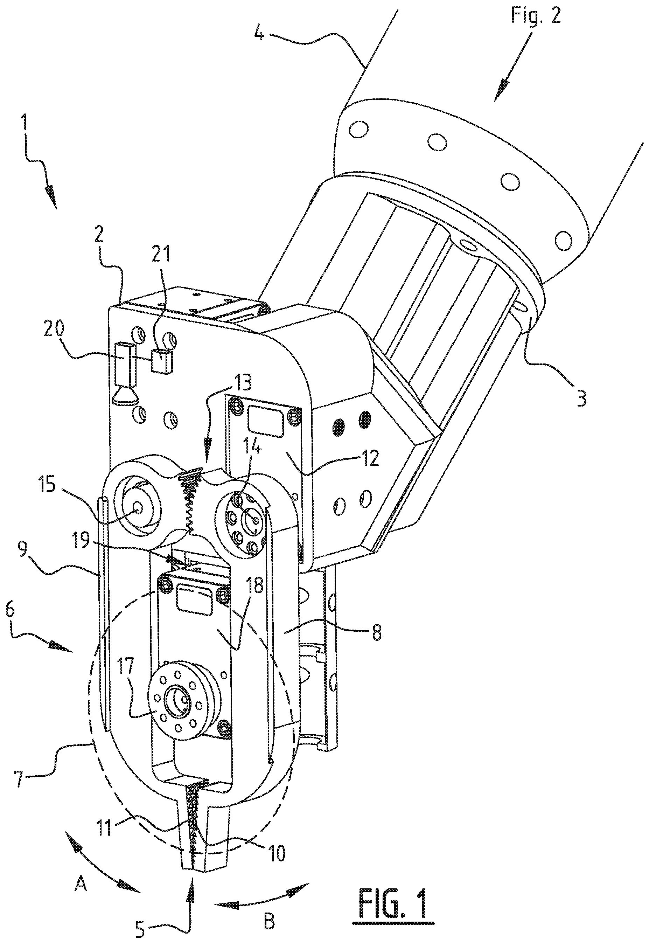

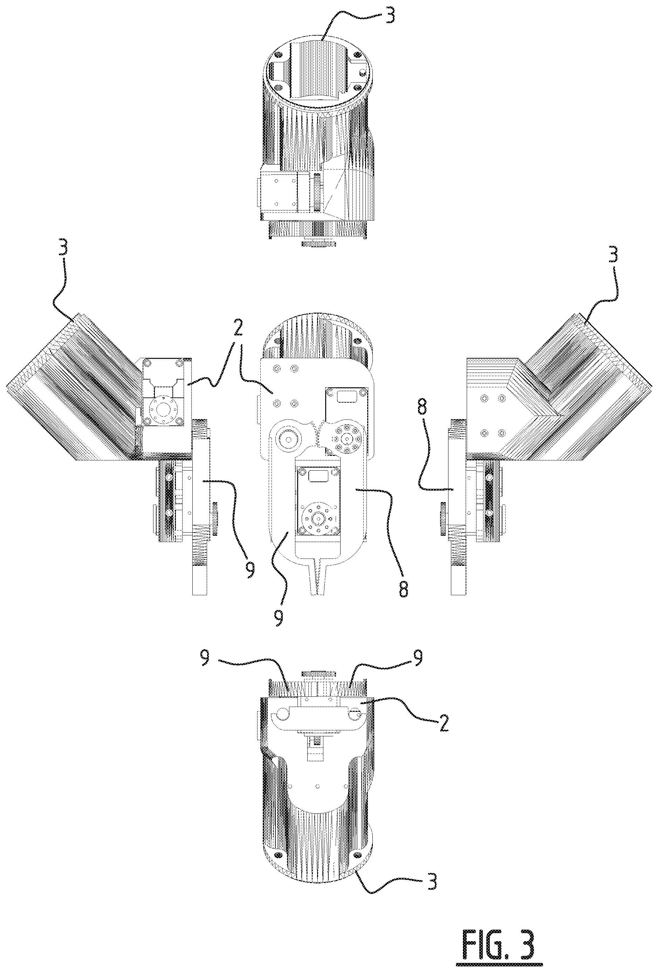

Figures 1, 2 and 3 exhibit a single embodiment of an agricultural manipulator 1, which will be discussed herein below in unison.

In general, an agricultural manipulator 1 is configured to perform various agricultural processes, such as harvesting and pruning. To this end, one or more than one of several manipulating devices may be included. Below, emphasis will be on a gripper 5 and a cutter 6, but other devices are by no means excluded from the scope of protection according to the appended claims.

In detail, agricultural manipulator 1 comprises a carrier 2. Arranged on carrier 2 is a connector 3. Connector 3 is configured to connect manipulator 1 to a schematically represented robot arm 4. Robot arm 4 is schematically represented, as only a free end thereof is shown. However, various types of robot arms will readily present themselves to the skilled person in the art from the field of automobile assembly, and many other applications. A wide selection of robot arms is available with varying degrees of freedom to handle the manipulator and orient it in a desired direction. Such robot arms may likewise ensure that a desired approach path is taken to reach portions of plants targeted for processing, without causing harm to other parts of plants than those targeted for processing.

The robot arm may be mounted on a moveable platform, such a wheels or tracks. The robot arm or the platform therefor may comprise storage facilities.

Also arranged on carrier 2 are gripper 5 and cutter 6.

The storage facilities may store replacements, for example at least one entire replacement agricultural manipulator 1. The replacement agricultural manipulator 1 may be configured to manually or automatically replace a malfunctioning specimen to allow for continuous operation in the field in case of a malfunction of a particular manipulator 1. Alternatively of additionally, the storage facilities may harbor parts or components thereof, such as a replacement gripper 5 or fresh and sharpened cutter 6, for the same purpose.

To show the configuration of gripper 5 more clearly, a rotary cutter blade 7 of the cutter 6 is removed and its position in operation is shown in dashed lines. Gripper 5 comprises gripper elements 8, 9.

In the shown embodiment, both gripper elements 8, 9 are moveable relative to the carrier 2 and relative to the other of the gripper elements, to selectively grip, when in a closed position, or release, when in an open position, a portion of a plant (not shown) between gripping portions 10, 11 of gripper elements 8, 9.

Carrier 2 comprises a gripper drive 12 connected to one of the gripper elements 8, wherein a transmission 13 formed by meshed tooth wheels is arranged between the gripper element 8 that is connected to the drive and the other gripper element 9 that is also movable relative to carrier 2. Alternatively, each gripper element 8, 9 may have its own gripper drive, or one of the gripper elements may be fixed in a stationary fashion to carrier 2 while the other of the gripper elements is made to move to / from the stationary one of the gripper elements

Gripper elements 8, 9 are, however, in the shown embodiment, both moveable in the direction of double arrows A and B relative to carrier 2 and are connected to carrier 2, each in a rotation shaft 14, 15, wherein rotation shaft 14 of the driven gripper element 8 coincides with a motor shaft of gripper motor 12. Alternatively, gripper elements 8, 9 may be moved relative to carrier 2 and / or to each other on the basis of a pivot or a slide mechanism, to realise gripping (closed) and releasing (open) positions of gripper elements 8, 9.

Gripper elements 8, 9 are curved to define a space there between, when in the closed position, this is to say that gripper elements 8, 9 extend from rotation shafts 14, 15 in a curve, in order to have the gripping portions 10, 11 of gripper elements 8, 9 abut in the closed position of gripper 5, while exhibiting a distance (in horizontal direction in figure 1) and thus define a space 16 there between.

As was already noted above, cutter 6 may comprise a rotary cutter blade 7, which is only shown in dashed lines and only in figure 1. Although the cutter blade 7 is disassembled to yield the view of figure 1, a mount 17 for rotary cutter blade 7 is clearly shown to be arranged in the space 16 between curved gripper elements 8, 9. Mount 17 for cutter blade 7 is connected to a cutter drive 18 on carrier 2. Cutter drive 18 is configured to be moved back-and-forth, to and from gripping portions 10, 11 of gripper elements 8, 9, to which end a translation mechanism 19 is provided between carrier 2 and cutter drive 18. Translation mechanism 19 is configured to selectively advance cutter 6 towards or withdraw cutter 6 from gripping portions 10, **11** of gripper elements 8, 9, for example by sliding in a rail provided on or in carrier 2, for which a further cutter advancement drive may be provided..

More in detail, translation mechanism 19 is configured to advance cutter 6 towards or withdraw cutter 6 from gripping portions 10, 11 of gripper elements 8, 9 over sides thereof. As a consequence, cutter blade 7 may cut portions of plants very close to where these portions are engaged by gripper elements 8, 9 of gripper 5.

As an alternative for cutter 6 comprising a rotary cutter blade 7alternative embodiments than those shown herein may comprise scissors, a laser, a sweeping cutter blade, or any other solution. However, rotary cutter blade 7 has a distinct advantage in terms of simplicity and operational time before needing sharpening after turning blunt. As a potential further embodiment, a sharpener (not shown) or grinding block may be provided, which may be resiliently mounted on carrier 2 to be biased against a cutting edge of cutter blade 7 to sharpen the cutting edge of cutter blade 7, while in operation, so that no down time is experienced for exchanging or sharpening sweeping cutters or scissors.

In the present embodiment of agricultural manipulator 1, further an image capturing device is provided, in the form of a camera 20. Alternatives for a camera will readily present themselves to a skilled person, such as a depth sensor, a vision capturing device, an IR camera, and the like. The manipulator may further comprise a processor 21, which is connected with at least one of gripper 5 and cutter 6, and may be configured to control operations of gripper 5 and/or cutter 6, based on captured images acquired through the image capturing device 20.

The present disclosure also relates to an assembly of an above embodiment of a agricultural manipulator 1 and robot arm 4, which may comprise a robot arm controller, wherein manipulator 1 is mounted on robot arm 4 via connector 3 arranged on carrier 2.

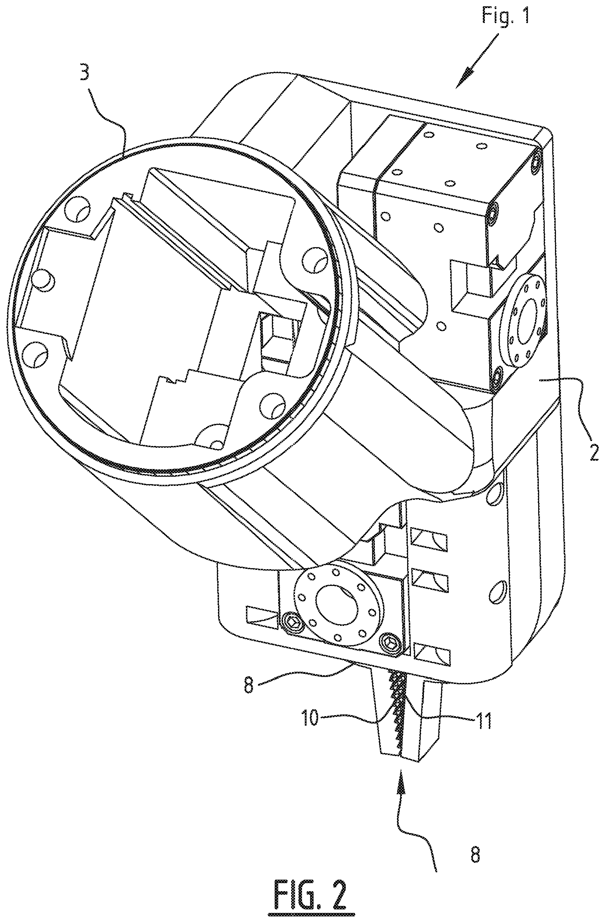

Preferably, robot arm 4 is an industrial robot arm. In an alternative embodiment image capturing device 20 may be mounted on robot arm 4. In figure 2, in particular, a view into the connector 3 is visible. From the view into connector 3 it is evident, that the connector may be adapted to any particular free end of a robot arm 4 particularly selected to be deployed in an assembly with manipulator 1. In the example of figure 2, robot arm 4 may have a male coupling part, to be inserted into a female coupling part 22 of connector 3. Also, through connector 3 and free end of robot arm 4, a path may be kept clear for cables and wires (not shown) for example for power supply to manipulator 1 and/or communications cabling.

Also, processor 21 may be incorporated in the robot arm controller (not shown), and such a robot arm controller may be positioned remote from the assembly, for example in a control room or server room.

Following the above embodiment description of aspects of the present disclosure, it's noted that details are exhibited, which are not all to be limiting on the scope of the present disclosure, which is solely defined by the appended claims.

## Claims

1. Agricultural manipulator (1), configured to perform agricultural processing from a group, at least comprising harvesting, deleafing and pruning, and comprising:
- a carrier (2);
- a connector (3) arranged on the carrier (2) and configured to connect the manipulator (1) to a robot arm (4); and
- manipulating devices on the carrier, at least comprising a gripper (5) and a cutter (6),
wherein the gripper (5) comprises gripper elements (8, 9) of which at least one is moveable relative to the carrier (2) and relative to the other of the gripper elements, to selectively grip, when in a closed position, or release, when in an open position, a portion of a plant between gripping portions (10, 11) of the gripper elements (8, 9),
wherein the carrier (2) comprises a cutter drive (18) connected to the cutter (6),
**characterized in that** the cutter (6) is mounted on the carrier (2) through a translation mechanism (19) configured to selectively advance the cutter (6) towards or withdraw the cutter (6) from the gripping portions (10, 11) of the gripper elements (8, 9).

2. Agricultural manipulator according to claim 1, wherein the carrier (2) comprises a gripper drive (12) connected to the at least one gripper element, that is moveable relative to the other of the clamp elements.

3. Agricultural manipulator according to claim 1 or 2, wherein more than one of the gripper elements (8, 9) is moveable relative to the carrier.

4. Agricultural manipulator according to claim 2 and 3, wherein the gripper drive (12) is connected to one of the gripper elements (8, 9) that is movable relative to the carrier (2), wherein a transmission is arranged between the gripper element that is connected to the gripper drive (12) and at least one other gripper element that is also movable relative to the carrier (2).

5. Agricultural manipulator according to any of claims 2 - 4, wherein the at least one gripper element, that is moveable relative to the carrier, is connected to the carrier in a connection from a group, at least comprising: a rotation shaft, pivot, and a slide mechanism.

6. Agricultural manipulator according to any of claims 2 - 5, wherein the gripper elements (8, 9) are curved to define a space there between, when in the closed position.

7. Agricultural manipulator according to claim 6, wherein the cutter drive (18) is connected with the cutter (6) through the space between the curved gripper elements (8, 9).

8. Agricultural manipulator according to claim 1, wherein the translation mechanism (19) is configured to advance the cutter (6) towards or withdraw the cutter (6) from the gripping portions (10, 11) of the gripper elements (8, 9) over sides of the gripper elements (8, 9).

9. Agricultural manipulator according to any of claims 7-8, wherein the cutter (6) comprises a rotary cutter blade (7)

10. Agricultural manipulator according to any of the preceding claims, further comprising an image capturing device (20) and a processor (21), connected with at least one of the gripper (5) and the cutter (6), and configured to control operation of the at least one of the gripper (5) and the cutter (6) based on captured images acquired through the image capturing device (20).

11. Assembly of an agricultural manipulator according to any one of the preceding claims and a robot arm (4) comprising a robot arm controller, wherein the manipulator is mounted on the robot arm via the connector arranged on the carrier.

12. Assembly according to claim 11, wherein the robot arm (4) is an industrial robot arm.

13. Assembly according to claim 10 and claim 11 or 12, wherein the image capturing device (20) is mounted on the robot arm (4).

14. Assembly according to claim 10 and claim 11, 12 or 13, wherein the processor is incorporated in the robot arm controller.

15. Assembly according to any of claims 11 - 14, wherein the robot arm controller is positioned remote from the assembly.

## Patentansprüche

1. Landwirtschaftlicher Manipulator (1), der konfiguriert ist, um landwirtschaftliches Verarbeiten aus einer Gruppe durchzuführen, mindestens umfassend Ernten, Entblättern und Beschneiden und umfassend:
- einen Träger (2);
- einen Verbinder (3), der auf dem Träger (2) angeordnet ist und konfiguriert ist, um den Manipulator (1) mit einem Roboterarm (4) zu verbinden; und
- Handhabungsvorrichtungen auf dem Träger, mindestens umfassend einen Greifer (5) und einen Schneider (6),
wobei der Greifer (5) Greiferelemente (8, 9) umfasst, von denen mindestens eines relativ zu dem Träger (2) und relativ zu dem anderen Greiferelement bewegbar ist, um, wenn es in geschlossener Position ist, einen Abschnitt einer Pflanze zwischen Greifabschnitten (10, 11) der Greiferelemente (8, 9) wahlweise zu greifen oder wenn es in geöffneter Position ist, freizugeben,
wobei der Träger (2) einen Schneiderantrieb (18) umfasst, der mit dem Schneider (6) verbunden ist,
**dadurch gekennzeichnet, dass** der Schneider (6) auf dem Träger (2) durch einen Translationsmechanismus (19) montiert ist, der konfiguriert ist, um den Schneider (6) wahlweise zu den Greifabschnitten (10, 11) des Greiferelements (8, 9) hin vorzuschieben oder den Schneider (6) von diesen zurückzuziehen.

2. Landwirtschaftlicher Manipulator nach Anspruch 1, wobei der Träger (2) einen Greiferantrieb (12) umfasst, der mit dem mindestens einen Greiferelement verbunden ist, das relativ zu dem anderen der Klemmelemente bewegbar ist.

3. Landwirtschaftlicher Manipulator nach Anspruch 1 oder 2, wobei mehr als eines der Greiferelemente (8, 9) relativ zu dem Träger bewegbar ist.

4. Landwirtschaftlicher Manipulator nach Anspruch 2 und 3, wobei der Greiferantrieb (12) mit einem der Greiferelemente (8, 9) verbunden ist, das relativ zu dem Träger (2) bewegbar ist, wobei ein Getriebe zwischen dem Greiferelement, das mit dem Greiferantrieb (12) verbunden ist, und mindestens einem anderen Greiferelement, das ebenfalls relativ zu dem Träger (2) bewegbar ist, angeordnet ist.

5. Landwirtschaftlicher Manipulator nach einem der Ansprüche 2 bis 4, wobei das mindestens eine Greiferelement, das relativ zu dem Träger bewegbar ist, mit dem Träger über eine Verbindung aus einer Gruppe verbunden ist, die mindestens umfasst: eine Drehwelle, einen Drehzapfen und einen Gleitmechanismus.

6. Landwirtschaftlicher Manipulator nach einem der Ansprüche 2 bis 5, wobei die Greiferelemente (8, 9) gekrümmt sind, wenn sie in der geschlossenen Position sind, einen Raum dazwischen zu definieren.

7. Landwirtschaftlicher Manipulator nach Anspruch 6, wobei der Schneiderantrieb (18) mit dem Schneider (6) durch den Raum zwischen den gekrümmten Greiferelementen (8, 9) verbunden ist.

8. Landwirtschaftlicher Manipulator nach Anspruch 1, wobei der Translationsmechanismus (19) konfiguriert ist, um den Schneider (6) zu den Greifabschnitten (10, 11) des Greiferelements (8,9) hin, über Seiten des Greiferelements (8, 9) vorzuschieben oder den Schneider (6) von diesen zurückzuziehen.

9. Landwirtschaftlicher Manipulator nach einem der Ansprüche 7 bis 8, wobei der Schneider (6) eine Rotationsschneiderklinge (7) umfasst.

10. Landwirtschaftlicher Manipulator nach einem der vorstehenden Ansprüche, ferner umfassend eine Bildaufnahmevorrichtung (20) und einen Prozessor (21), der mit mindestens einem des Greifers (5) und des Schneiders (6) verbunden ist und konfiguriert ist, um den Betrieb des mindestens einen des Greifers (5) und des Schneiders (6) basierend auf den aufgenommenen Bildern, die durch die Bildaufnahmevorrichtung (20) erlangt werden.

11. Baugruppe aus einem landwirtschaftlichen Manipulator nach einem der vorstehenden Ansprüche und einem Roboterarm (4), umfassend eine Roboterarmsteuerung, wobei der Manipulator auf dem Roboterarm über den Verbinder, der auf dem Träger angeordnet ist, montiert ist.

12. Baugruppe nach Anspruch 11, wobei der Roboterarm (4) ein Industrieroboterarm ist.

13. Baugruppe nach Anspruch 10 und 11 oder 12, wobei die Bildaufnahmevorrichtung (20) auf dem Roboterarm (4) montiert ist.

14. Baugruppe nach Anspruch 10 und 11, 12 oder 13, wobei der Prozessor in der Roboterarmsteuerung eingebaut ist.

15. Baugruppe nach einem der Ansprüche 11 bis 14, wobei die Roboterarmsteuerung von der Baugruppe entfernt positioniert ist.

## Revendications

1. Manipulateur agricole (1), conçu pour mettre en œuvre un traitement agricole parmi un groupe comprenant au moins récolte, effeuillage et élagage, et comprenant :
- un support (2) ;
- une liaison (3) agencée sur le support (2) et conçue pour relier le manipulateur (1) à un bras robotique (4) ; et
- des dispositifs de manipulation sur le support, comprenant au moins un organe de préhension (5) et un organe de coupe (6),
dans lequel l'organe de préhension (5) comprend des éléments de préhension (8, 9) dont au moins l'un est mobile par rapport au support (2) et par rapport à l'autre des éléments de préhension, pour prendre sélectivement, lorsqu'on se trouve dans une position fermée, ou libérer, lorsqu'on se trouve dans une position ouverte, une partie d'une plante entre des parties de préhension (10, 11) des éléments de préhension (8, 9),
dans lequel le support (2) comprend un entraînement d'organe de coupe (18) relié à l'organe de coupe (6),
**caractérisé en ce que** l'organe de coupe (6) est monté sur le support (2) par le biais d'un mécanisme de translation (19) conçu pour faire avancer sélectivement l'organe de coupe (6) en direction, ou pour retirer l'organe de coupe (6), des parties de préhension (10, 11) des éléments de préhension (8, 9).

2. Manipulateur agricole selon la revendication 1, dans lequel le support (2) comprend un entraînement d'organe de préhension (12) relié à l'au moins un élément de préhension, qui est mobile par rapport à l'autre des éléments de serrage.

3. Manipulateur agricole selon la revendication 1 ou 2, dans lequel plus d'un des éléments de préhension (8, 9) est mobile par rapport au support.

4. Manipulateur agricole selon la revendication 2 et 3, dans lequel l'entraînement d'organe de préhension (12) est relié à l'un des éléments de préhension (8, 9) qui est mobile par rapport au support (2), dans lequel une transmission est agencée entre l'élément de préhension qui est relié à l'entraînement d'organe de préhension (12) et au moins un autre élément de préhension qui est également mobile par rapport au support (2).

5. Manipulateur agricole selon l'une quelconque des revendications 2 à 4, dans lequel l'au moins un élément de préhension, qui est mobile par rapport au support, est relié au support dans une liaison parmi un groupe, comprenant au moins : un arbre de rotation, un pivot et un mécanisme coulissant.

6. Manipulateur agricole selon l'une quelconque des revendications 2 à 5, dans lequel les éléments de préhension (8, 9) sont incurvés pour définir un espace entre eux, lorsqu'on se trouve dans la position fermée.

7. Manipulateur agricole selon la revendication 6, dans lequel l'entraînement d'organe de coupe (18) est relié à l'organe de coupe (6) par le biais de l'espace entre les éléments de préhension (8, 9) incurvés.

8. Manipulateur agricole selon la revendication 1, dans lequel le mécanisme de translation (19) est conçu pour faire avancer l'organe de coupe (6) en direction, ou pour retirer l'organe de coupe (6), des parties de préhension (10, 11) des éléments de préhension (8, 9) par-dessus des côtés des éléments de préhension (8, 9).

9. Manipulateur agricole selon l'une quelconque des revendications 7 à 8, dans lequel l'organe de coupe (6) comprend une lame de coupe rotative (7)

10. Manipulateur agricole selon l'une quelconque des revendications précédentes, comprenant en outre un dispositif de capture d'image (20) et un processeur (21), connectés à au moins l'un parmi l'organe de préhension (5) et l'organe de coupe (6), et configuré pour commander un fonctionnement de l'au moins un parmi l'organe de préhension (5) et l'organe de coupe (6) en fonction d'images capturées acquises par le biais du dispositif de capture d'image (20).

11. Ensemble d'un manipulateur agricole selon l'une quelconque des revendications précédentes et d'un bras robotique (4) comprenant un organe de commande de bras robotique, dans lequel le manipulateur est monté sur le bras robotique par l'intermédiaire de la liaison agencée sur le support.

12. Ensemble selon la revendication 11, dans lequel le bras robotique (4) est un bras robotique industriel.

13. Ensemble selon la revendication 10 et la revendication 11 ou 12, dans lequel le dispositif de capture d'image (20) est monté sur le bras robotique (4).

14. Ensemble selon la revendication 10 et la revendication 11, 12 ou 13, dans lequel le processeur est incorporé dans l'organe de commande de bras robotique.

15. Ensemble selon l'une quelconque des revendications 11 à 14, dans lequel l'organe de commande de bras robotique est positionné à distance de l'ensemble.
